# EUROPEAN PATENT APPLICATION

(11) **EP 4 459 983 A1**
(43) Date of publication of application: **06.11.2024**
(21) Application number: 23275072.9
(22) Date of filing: 03.05.2023
(51) Int. Cl.: H04N 13/128, H04N 13/344

(54) **SYSTEM FOR DISPLAYING VIRTUAL IMAGES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system (200) for displaying virtual images (43a, 43b), in an ambient scene, the system comprising: a display device (100) for presenting virtual images to the user in a user field of view; a first imaging device (22) generating first ambient image data (CD1) in a first portion (ABC) of the ambient scene, a second imaging device (24) generating second ambient image data (CD2) in a second portion (DEF) of the ambient scene, the first portion and second portion overlapping to define a common portion (GDB) of the ambient scene imaged by both the first and second imaging device; a processor unit (50) for: receiving virtual image data (VID) specifying a virtual image (43a, 43b) and a target real world object (T, R, S) or zone (302, 304) to which the virtual image (43a, 43b) should appear anchored; receiving the first and second ambient image data; from the first ambient image data, identifying the presence of the target real world object or zone, and determining a position of the target real world object or zone within the first portion of the ambient scene; from the second ambient image data, identifying the presence of the target real world object or zone, and determining a position of the target real world object or zone within the second portion of the ambient scene; calculating an offset between the position within the first portion and the position within the second portion; dependent on the offset, selecting a focal depth for the display of the virtual image; displaying the virtual image at the selected focal depth.

## Description

### FIELD

The present invention relates to a system for displaying virtual images.

### BACKGROUND

Head worn displays are known which present virtual images to a user. These virtual images can be presented to a user by projecting light onto a semi reflective visor or eyepiece such that the virtual images appear superimposed onto the ambient environment being viewed by the user.

Typically such virtual images (also referred to in this context as augmenting images) are presented at a single specific focal depth in the ambient scene.

Head worn display systems monitor the ambient scene viewed by the user and process the associated data so that an associated display device can present virtual images appropriately.

Often a range to an object in the scene is calculated directly in assessing where in the scene to superimpose or anchor virtual objects.

### SUMMARY

According to a first aspect of the present invention, there is provided a system for displaying a virtual image, in an ambient scene, the system comprising:
A display device for presenting virtual images to the user in a user field of view;
A first imaging device generating first ambient image data (CD1) in a first portion (ABC) of the ambient scene,
A second imaging device generating second ambient image data (CD2) in a second portion (DEF) of the ambient scene,
   The first portion and second portion overlapping to define a common portion (GDB) of the ambient scene imaged by both the first and second imaging device;
A processor unit for:
   Receiving virtual image data (VID) specifying a virtual image and a target real world object (T, R, S) or zone to which the virtual image should appear anchored;
   Receiving the first and second ambient image data;
   From the first ambient image data, identifying the presence of the target real world object or zone, and determining a position of the target real world object or zone within the first portion of the ambient scene;
   From the second ambient image data, identifying the presence of the target real world object or zone, and determining a position of the target real world object or zone within the second portion of the ambient scene;
   Calculating an offset between the position within the first portion and the position within the second portion;
   Dependent on the offset, selecting a focal depth for the display of the virtual image;
   Displaying the virtual image at the selected focal depth.

Identifying the presence of the target real world object or zone in the first or second portion of the ambient scene may comprise performing object recognition by comparing the respective ambient image data against data representative of a pre-determined target or set of targets.

Identifying the presence of the target real world object or zone in the first and second portion of the ambient scene may comprise performing object recognition by comparing the first ambient image data against the second ambient image data, to identify substantially identical image data.

The system may comprise a user-mountable frame for holding the display device in the view of the user.

The first and second imaging devices may be mounted at the frame. Further, they may be mounted at the frame such that they are either side of the user's eyes when the display device is held in the view of the user.

The system may be configured such that the common portion occupies at least substantially all of the user's binocular field of view.

The offset may be calculated by using: the angular position of the object or area from the first imaging device; and the angular position of the object or area from the second imaging device. In particular, the offset may be calculated by subtracting one angular position from another.

Dependent on the offset, selecting a focal depth for the display of the virtual image, may comprise: applying a threshold to the offset; for offsets above the threshold, displaying the virtual image at a first focal depth; and for offsets below the threshold, displaying the virtual image at a second focal depth.

The first focal depth may be closer to the user than the second focal depth. The first focal depth may be between 50cm and 200cm. The second focal depth may be at infinity.

The display device may comprise a first image source for generating an optical signal at the first focal depth, and a second image source for generating an optical signal at the second focal depth.

According to a further aspect, there is provided a helmet comprising a display system according to the first aspect of the invention.

### BRIEF DESCRIPTION OF THE FIGURES

Embodiments of the invention will now be described by way of example only with reference to the figures, in which:
Figure 1 shows a display device;
Figure 2 shows a display system comprising the display device of Figure 1; and
Figure 3 shows a further view of a display system;
Figure 4 shows a mapping of an ambient scene into a far field zone and a near field zone; and
Figure 5 shows an object comparison using two camera feeds.

### DETAILED DESCRIPTION

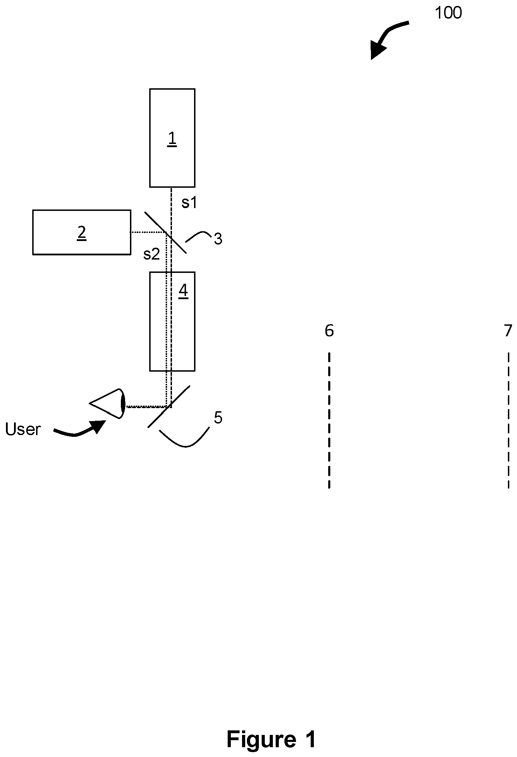

With reference to Figure 1, an example display device 100 is to be described.

Display device 100 comprises a first image source 1 and a second image source 2.

Each of these image sources is able to generate and output light signals, respectively s1, s2, bearing imagery such as virtual images. These signals are output towards a combiner element 3.

The first light output signal s1 is associated with a first, nearer, focal depth 6, and the second light output signal s2 is associated with a second, focal depth 7 different to the first. This difference can be achieved in a number of different ways. For example the stand-off distance between the respective image sources and the combiner element 3 could be different. Alternatively or additionally the focal length could be determined by a the image source and the output light generated.

In the present example, the first and second focal lengths are fixed. The nearer focal depth may be configured to be half to 2 metres ahead of the user. The second focal depth may be configured to be at infinity.

The first image source 1 is arranged generally perpendicular to the second image source 2.

The combiner element 3 is semi-reflective, semi-transmissive and is arranged to receive light output from the first and second source. The combiner 3 is inclined at 45 degrees to the output light from each of the sources. (Other forms of partially-reflective, partially-transmissive combiner elements could be used in alternate embodiments).

As shown, light from the first image source 1 is transmitted through the combiner element 3 whereas light from the second image source 2 is reflected through 90 degrees. Accordingly, the light signals s1 output by the first image source 1 are combined with the light signals s2 from the second image source 2 at the semi-reflective combiner element 3.

Thus there is output from the combiner element 3 a combined light beam. This combined light beam is received by relay optics 4 being a set of lenses arranged in series to condition the combined beam. The appropriate conditioning of the beam and hence the appropriate configuration of the relay optics 4 would be apparent to the skilled optic designer.

The relay optics 4 output the combined, conditioned light to a second combiner element 5, which is partially-reflective and partially-transmissive. Typically the combiner element 5 will be integrated into a visor or eyepiece or pair of eyepieces for positioning in a user's view.

The combiner element 5 is configured to receive the combined, conditioned light and reflect at least a portion of such into the eye of a user. As shown for this example, the user's boresight view is perpendicular to the output from the relay optics 4 and the combiner element is inclined at 45 degrees to the output from the relay optics 4 and positioned on the user's boresight view.

Accordingly, the virtual images carried by the light signal s1 output by image source 1 and the virtual images carried by the light signal s2 output by the image source 2 are presented to the user.

The second combiner 5 is partially reflected and partially transmissive. As such, the user is able to see the virtual images superimposed on the user's ambient view.

Given the respective focal depths of the light signals (s1, s2) and the respective virtual images they bear, the user will perceive the virtual images at one of two focal depths: a nearer focal depth 6 and a farther focal depth 7. In the present example, the first image source 1 generates virtual images for a nearer focal depth 6 whereas second image source 2 generates virtual images for the farther focal depth 7.

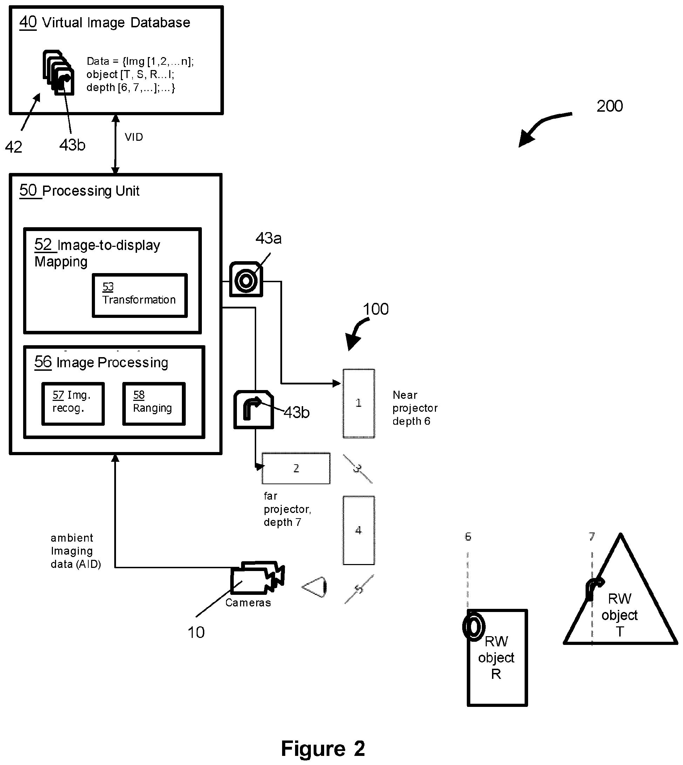

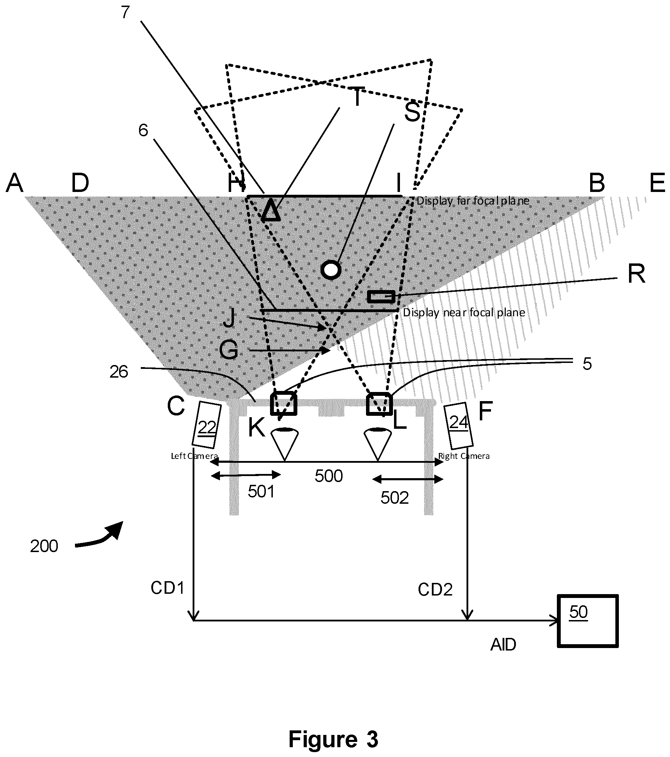

Figure 2 and Figure 3 set out an example display system 200 utilising the display device 100. (For ease of viewing not all components of the system are shown in Figure 3).

Also shown are real world objects R, T and S, and the user's eyeball.

The system 200 comprises the display device 100, a virtual image database 40, a processing unit 50 and a camera device 10.

The virtual image database 40 stores electronically a number of virtual images (43a, b,..., n) and accompanying metadata. In particular, each virtual image may be listed alongside a particular target real-world object (T, R, S... m), and/or a particular real-world region (302, 304, ...,p), and/or a particular focal depth (near, far, ..., q) as an image data set 42.

The camera device 10 may be one or more cameras. The camera device 10 is arranged to substantially view the same ambient scene as the user, and generate ambient imaging data (AID).

The processing unit 50 comprises an image-to-display mapping module 52 and an image processing module 56. The processing unit 50 is operably connected to the virtual image database 40 and the camera device 10 such that it can receive image data sets 42 and AID respectively. Further, the processing unit 50 is operably connected to both the first image source 1 and the second image source 2 such that it may address appropriate imagery-bearing signals to each.

The image-to-display mapping unit 52 comprises a transformation 53 submodule, which may be used to apply a scaling, rotation or skewing to virtual images.

The Image processing module 56 comprises an image recognition 57 submodule and a ranging 58 submodule.

As shown in Figure 3, the camera device 10 comprises a left camera 22 and a right camera 24. Left camera generates first camera data (CD1) and right camera generates second camera data (CD2). CD1 and CD2 combined represent AID.

The display system 200 is at least partially arranged on a mount structure or frame 26 having the form of a head worn structure e.g. a pair of glasses or goggles. As such the mount tends to comprise arms for resting on the users ears, linked by a member where eyepieces may be mounted, and a bridge to rest on the user's nose. (Other head worn structures are contemplated and would include helmet mounted structures).

The left and right cameras 22, 24 are mounted on the left and right outermost sides of the mount structure 26, separated by dimension 500. The mount structure accommodates the second combiner 5. Here the second combiner 5 is shown as a pair of eyepieces, one for each eye. In alternative embodiments, the second combiner may be a single visor member.

The eyepieces are located on the mount 26 in between the left 22 and right camera 24. Left camera 22 defines a separation 501 between itself and the left eye. Right eye 24 defines a separation of 502 between itself and the right eye.

The mount structure 26 is arranged such that when worn at the users head, the combiners 5 are positioned over the user's eyes.

As depicted in Figure 3, the left camera 22 has a field of view ABC. The right camera 24 has a field of view DEF. The fields of view of the left and right cameras overlap at a common portion BDG. The nearest point of the common portion to the user is point G. The system is be configured to have a minimal separation between point G and the user, thereby covering substantially the user's field of view.

Further, the users left eye has a field of view IHK and the right eye IHL. There is an overlap in the region IHJ where the user would have binocular vision.

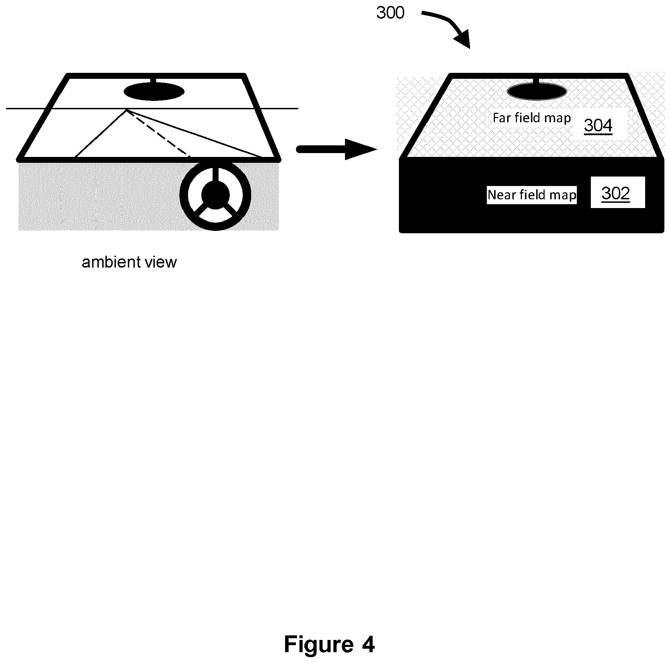

Figure 4 shows a view of an ambient scene in which the display system 200 may be used. In particular, Figure 4 shows an ambient scene a user may view while sat in a car. The scene has a distinct internal zone (including the dashboard, driving wheel, read view mirror and windscreen frame) and a distinct outside view (including the road and road side). This ambient scene may be converted into a map 300 comprising a near field zone 302 and a far field zone 304. For the near field zone 302 a near field display of virtual images is preferable and for the far field zone 304 a far field display of virtual images is preferable.

In operation the display system 200 is able to recognise objects (e.g. R, T, S) or zones (304, 302) in a scene and then match predetermined virtual objects to the respective objects or zones according to predetermined rules. In particular it is provided that certain virtual images are to be presented at a near focal length and others are to be presented at a far focal length.

By way of operational example, a user may wear the display system 200 and view an ambient scene. Objects T, S and I are present in the scene.

(Alternatively, the scene may be pre-defined and divided into distinct zones, each having a characteristic focal length. Figure 4 shows such an arrangement where a vehicle cockpit/dashboard represents a first zone, near field map 302, and the outside scene the second zone, far field map 304.)

In viewing the ambient scene, the user directs cameras 22, 24 towards the scene and imaging data (AID) is generated by the cameras and sent to the processing unit 50.

The imaging data (AID) is received by the processing unit 50 and directed to the image processing module 56. At the image processing module 56, the AID is used by an image recognition module 57 which scans the data for objects or zones of interest. Such zones or objects will generally have been pre-defined in accordance with the intended use of the system.

As a result of such scanning, the image recognition module 57 may generate a signal indicating the presence (e.g. yes or no), and direction (e.g. as a bearing), of an object (or zone) in the scene.

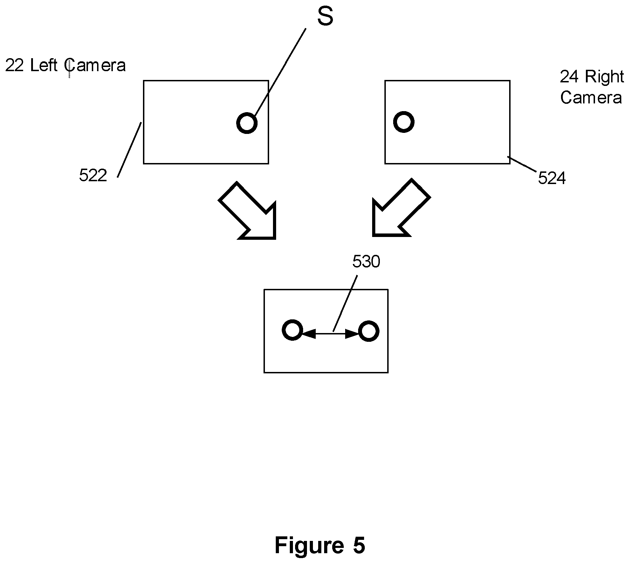

Further, a ranging module 58 may use the AID to determine the distance to the recognised object or zone. Such ranging may be performed using standard rangefinder geometrical techniques, parallax determinations, or may use alternative methods (see the discussion of Figure 5 below).

Therefore, as a result of the image processing module 56 using the AID, the processing unit 50 may generate a signal denoting the presence, and location (e.g. bearing and range) of a particular object or zone.

The processor unit 50 can address this presence/location signal to the image-to-display mapping module 52. The mapping module 52, making reference to the virtual image database 40, uses the presence/location signal to select any appropriate virtual image that is to be associated with the object/zone.

Moreover, the mapping module 52 uses the presence/location signal to determine a focal depth for the virtual image.

Once the desired focal depth for a virtual image has been determined, given the identified objects or zones, the processing unit 50 can address the virtual image, as a suitable signal, to the relevant image source 1 or 2.

As a contextual example, where the user is in control of a vehicle, the system could be pre-configured such that: a speedometer reading is to be presented as a virtual image 43a on the dashboard at the near focal length 6, and a directional arrow (e.g. for navigation) is to be presented as a virtual image 43b to appear centrally in the windscreen at the far focal length 7.

Accordingly, when the image processing module 56 recognises in the AID the dashboard, then the presence/location signal will be used by the mapping module 52 to select the speedometer virtual image 43a and address it to the near depth projector 1.

Further, when the image processing module 56 recognises in the AID the windscreen, then the presence/location signal will be used by the mapping module 52 to select the directional arrow virtual image 43b and address it to the far depth projector 2.

Figure 5 illustrates steps in a process for determining the range of an object, such as may be used with the system 200.

Box 522 represents an image captured at a certain instant by left camera 22 (as such box 522 represents camera data, CD1). Box 425 represents an image captured at that same instance by right camera 24 (as such box 425 represents camera data, C2).

Present in the ambient scene and each of the images 522, 524 (associated with the same time) is the object S.

However, object S is relatively close to the imaging devices 22, 24, which are set apart by separation 500. Thus the location of object S is different in each of the images 522 and 524. Accordingly an offset 530 representing the camera-to-camera discrepancy of close objects is defined.

This can present a dilemma for the wider imaging system in determining where in the display to lay up certain virtual images that are to be, from the user's view, superimposed on object S.

However, if the offset between respective images of object S is determined (e.g. overlapping the images 522 and 524 and counting the intermediate pixels), then this offset can be used to estimate a specific value for the range to the object S e.g. through use of a look up table.

Further, the location of S, for the purposes of locating any relevant virtual images, can be taken as the average position of S between the two images. (This assumes that the left and right cameras are mounted at the same distance from the centre of the users field of view). As shown in Figure 3, the separation 501 between the left eye and the left camera is equal to separation 502 between the right eye and the right camera. (Of course if there were differences between separation 501 and separation 502, then an aggregated position of the object S, for the purposes of superimposing virtual images, could be calculated taking by taking a corresponding weighted average of the positions).

A still further use for the offset 530 is in addressing virtual images to either image source 1 or 2 without having to determine a specific range to the associated object. For example if the offset 530 for an object S is above a predetermined threshold, it may be determined that any virtual images mapped to the object should be sent to the first image source 1 for near focal depth display. Conversely, is the offset is below the predetermined threshold, it may be determined that any virtual images mapped to that object should be sent to the second image source 2 for far focal depth display. Such a further use could find particular utility where particular objects or zones are likely to shift between the near field and the far field.

In the above examples, the camera device 10 has been used both as a ranging device and as an imaging device. In alternative examples, it may be possible to provide a ranging device which is separate from an imaging device.

The display device and system may be provided at a helmet. The helmet may be for use in managing or controlling a vehicle, especially an aircraft.

## Claims

1. A system (200) for displaying virtual images (43a, 43b), in an ambient scene, the system comprising:
A display device (100) for presenting virtual images to the user in a user field of view at a first or a second focal depth;
A first imaging device (22) generating first ambient image data (CD1) in a first portion (ABC) of the ambient scene,
A second imaging device (24) generating second ambient image data (CD2) in a second portion (DEF) of the ambient scene,
The first portion and second portion overlapping to define a common portion (GDB) of the ambient scene imaged by both the first and second imaging device;
A processor unit (50) for:
Receiving virtual image data (VID) specifying a virtual image (43a, 43b) and a target real world object (T, R, S) or zone (302, 304) to which the virtual image (43a, 43b) should appear anchored;
Receiving the first and second ambient image data;
From the first ambient image data, identifying the presence of the target real world object or zone, and determining a position of the target real world object or zone within the first portion of the ambient scene;
From the second ambient image data, identifying the presence of the targ1et real world object or zone, and determining a position of the target real world object or zone within the second portion of the ambient scene;
Calculating an offset between the position within the first portion and the position within the second portion;
Dependent on the offset, selecting a focal depth for the display of the virtual image;
Displaying the virtual image at the selected focal depth.

2. A system according to claim 1 wherein identifying the presence of the target real world object or zone in the first or second portion of the ambient scene comprises performing object recognition by comparing the respective ambient image data against data representative of a pre-determined target or set of targets.

3. A system according to claim 1 wherein identifying the presence of the target real world object or zone in the first and second portion of the ambient scene comprises performing object recognition by comparing the first ambient image data against the second ambient image data, to identify substantially identical image data.

4. A system according to claim 1, 2, or 3 the system comprising a user-mountable frame (26) for holding the display device in the view of the user.

5. A system according to claim 4 wherein the first and second imaging devices (22, 24) are mounted at the frame (26).

6. A system according to claim 5 wherein the first and second imaging devices are mounted at the frame such that they are either side of the user's eyes when the display device is held in the view of the user.

7. A system according to any one of the preceding claims configured such that the common portion occupies at least substantially all of the user's binocular field of view.

8. A system according to any of the preceding claims wherein the offset is calculated by using:
the angular position of the object or area from the first imaging device; and
the angular position of the object or area from the second imaging device.

9. A system according to claim 8 wherein the offset (530) is calculated by subtracting one angular position from another.

10. A system according to any preceding claim wherein dependent on the offset, selecting a focal depth for the display of the virtual image, comprises:
Applying a threshold to the offset;
For offsets above the threshold, displaying the virtual image at a first focal depth; and
For offsets below the threshold, displaying the virtual image at a second focal depth.

11. A system according to claim 10 wherein the first focal depth is closer to the user than the second focal depth.

12. A system according to claim 11 wherein the first focal depth is between 50cm and 200cm.

13. A system according to claim 11 or 12 wherein the second focal depth is at infinity.

14. A system according to any of the previous claims wherein the display device comprises a first image source for generating an optical signal at the first focal depth, and a second image source for generating an optical signal at the second focal depth.

15. A helmet comprising a display system according to any of the preceding claims.
